# EUROPEAN PATENT APPLICATION

(11) **EP 4 283 750 A1**
(43) Date of publication of application: **29.11.2023**
(21) Application number: 23159384.9
(22) Date of filing: 01.03.2023
(51) Int. Cl.: H01M 10/42, H01M 10/48, H01M 50/251, H01M 50/284, A62C 3/16, A62C 99/00

(54) **PREVENTION AND CONTROL METHOD AND SYSTEM OF NITROGEN PROTECTION AND MULTI-REGION LEVEL-BY-LEVEL DETECTION FOR ENERGY STORAGE POWER STATION**

(30) Priority: 26.05.2022 CN 202210581218
(71) Applicant: Yantai Chungway New Energy Technology Co., Ltd., Yantai City, Shandong 264006 (CN)
(72) Inventor: Wang, Tao, Yantai, 264006 (CN); Tan, Yechao, Yantai, 264006 (CN); Liu, Yuxi, Yantai, 264006 (CN); Zhang, Lilei, Yantai, 264006 (CN); Li, Mingming, Yantai, 264006 (CN); Shi, Xiaotong, Yantai, 264006 (CN)
(74) Representative: Monteiro Alves, Inês

(57) **Abstract**

Disclosed in the present invention is a prevention and control method of nitrogen protection and multi-region level-by-level detection for an energy storage power station. The prevention and control method of nitrogen protection and multi-region level-by-level detection for an energy storage power station includes two modes: a normal operating mode and an abnormal mode. In the two modes, fire extinguishing measures of different levels are adopted for a battery pack, a battery cluster, a battery compartment, and a device compartment with reference to early warning thresholds of different levels. Further disclosed is a prevention and control system of nitrogen protection and multi-region level-by-level detection for an energy storage power station. Beneficial effects: level-by-level detection and protection and multi-approach protection are respectively performed for four protection regions of an energy storage power station: a battery pack, a battery cluster, a battery compartment, and a device compartment, thereby truly implementing effective prevention, control, and protection of the energy storage power station.

## Description

### Technical field of the invention

The present invention relates to the field of prevention, control, and protection technologies of energy storage power stations, and specifically, to a prevention and control method and system of nitrogen protection and multi-region level-by-level detection for an energy storage power station.

### Background of the invention

2021 is a big year for global energy storage having 1.24 GW of new capacity, with an increase of over 150% from 2020. The rapid development of energy storage is inseparable from supportive government policies, ambitious climate commitments, and the growing demand for grid flexibility. Currently, lithium-ion battery production is one of the dominant energy storage technologies, but potential safety hazards caused by the safety limitations of lithium-ion batteries and the inconsistencies caused by the long operation of a large number of battery cells inside energy storage power stations cannot be ignored.

For existing firefighting systems for energy storage power stations or battery containers, a heptafluoropropane fire extinguishing agent is mostly used. When a temperature or smoke detector in the system detects abnormal data, heptafluoropropane is sprayed in an entire battery room or container, to extinguish open fire through the function of oxygen isolation and chemical inhibition of heptafluoropropane. However, this method does not spray gas at a point of fire or a battery module with thermal runaway. In this case, a large amount of extinguishing agent is required, the efficiency of fire extinguishing is reduced, and heat transfers very easily to cause a larger fire. Because the gaseous fire extinguishing agent cannot implement long-term cooling, the thermal runaway in a battery cannot be thoroughly inhibited. As the internal reactions in the battery continue, a lot of heat accumulates, and flammable gas continues to be released. As a result, fire in the battery restarts and thermal runaway spreads, causing a lot of property damage and casualties.

To improve the reliability of fire extinguishing devices and solve the shortcomings of gas fire extinguishing, Chinese Patent Application No. 201110235922.7 proposes a water-based fire extinguishing agent for extinguishing a fire in battery with thermal runaway in a battery module, and smoke exhaust is performed at the same time, which has the characteristics of fast fire extinguishing speed and low smoke, and timely smoke exhaust can quickly extract combustible gases released from the battery, to avoid the occurrence of explosion due to the accumulation of combustible gases. A water blocking device and a water drainage device are further used in such a fire extinguishing system to reduce a possibility of electric short-circuits due to spreading of water.

However, the above patent has the following disadvantages.
(1) The fire extinguishing system uses a water-based extinguishing agent with a high conductivity coefficient, and there is always a risk of electric leakage caused by spraying onto a battery in a normal state, causing certain safety risks.
(2) Although water has good heat storage capacity, the boiling point of water is only 100°C, which is much lower than the temperature of the thermal runaway of a battery, making it impossible for water to inhibit the restart of fire in the battery.
(3) This fire extinguishing system can only extinguish fire in a battery module. If fire comes from a battery room or another space inside a container, fire extinguishing cannot be implemented.

Moreover, in Application 202010942589.2 filed by China Electric Power Research Institute Co., Ltd., smoke concentration or combustible gas concentration at interior and exterior architecture of a battery room of an energy storage power station is detected, and the temperature inside the battery room is detected. According to different cases, a gas fire extinguishing method is used to extinguish fire for the entire battery room, or a liquid fire extinguishing method is used to submerge a problematic battery module with an extinguishing agent, or the gas fire extinguishing method is used to extinguish fire in an entire battery room and at the same time a liquid fire extinguishing system is used to submerge a problematic battery module.

Although fire extinguishing in a battery room is added in the above patent, a false alarm is inevitable if single detection elements (smoke, combustible gases, and temperature) in different spaces are used for determination. Once a false alarm occurs, according to the fire extinguishing method in the patent, comprehensive coverage of a gaseous fire extinguishing agent, a liquid fire extinguishing agent, or both a gaseous fire extinguishing agent and a liquid fire extinguishing agent in a battery room may cause a huge loss, and the patent also has high electrical conductivity safety issues of a liquid fire extinguishing agent such as firewater.

### Summary of the invention

An objective of the present invention is to provide a prevention and control method and system of nitrogen protection and multi-region level-by-level detection for an energy storage power station to overcome the deficiencies in the prior art, so that level-by-level detection and protection and multi-approach protection are respectively performed for four protection regions of an energy storage power station: a battery pack, a battery cluster, a battery compartment, and a device compartment, thereby truly implementing effective prevention, control, and protection of the energy storage power station.

The objective of the present invention is achieved by using the following technical measure: a prevention and control method of nitrogen protection and multi-region level-by-level detection for an energy storage power station. The prevention and control method of nitrogen protection and multi-region level-by-level detection for an energy storage power station includes two modes: a normal operating mode and an abnormal mode, where:
1) in the normal operating mode, a solenoid valve a and a solenoid valve N are normally open, a solenoid valve b, a solenoid valve s, and a solenoid valve d are normally closed, nitrogen starts to be filled into a battery pack, and when an oxygen sensor value in a detector A in the battery pack is less than or equal to a or a pressure sensor value in the detector is greater than or equal to b, in this case, the solenoid valve N is closed, filling of nitrogen into the battery pack is stopped; and when the oxygen sensor value in the detector A in the battery pack is greater than or equal to c and the pressure sensor value is less than or equal to d, the solenoid valve N is opened, and N2 starts to be filled into the battery pack; and
2) the abnormal mode includes that a device compartment is abnormal and that a battery compartment is abnormal;

when the device compartment is abnormal, a primary early warning threshold D1 and a secondary early warning threshold D2 of a detector D are set, and when a detection value of the detector D is greater than the primary early warning threshold D1 and is less than the secondary early warning threshold D2, it is determined that the detector D reaches primary early warning, and an audible and visual alarm flashes and buzzes; and when the detection value of the detector D is greater than the secondary early warning threshold D2, it is determined that the detector D reaches secondary early warning, in this case, the detector D controls the solenoid valve d to be opened, the solenoid valve a is closed, the solenoid valve b and the solenoid valve s still remain in a closed state, a gaseous fire extinguishing agent bottle X is opened, and a gaseous fire extinguishing agent starts to sprayed into the device compartment; and

when the battery compartment is abnormal, a primary early warning threshold A1 and a secondary early warning threshold A2 of a combination detector A, a primary early warning threshold B1 and a secondary early warning threshold B2 of a combination detector B, a primary early warning threshold C1 and a secondary early warning threshold C2 of a combination detector C are set, when a detection value of a combination detector A in a battery pack is greater than or equal to the primary early warning threshold A1 but is less than or equal to the secondary early warning threshold A2, in this case, a central controller controls the audible and visual alarm to flash and buzz; when the detection value of the combination detector A in the battery pack is greater than or equal to the secondary early warning threshold A2 and a detection value of a detector B in a battery cluster is greater than or equal to the primary early warning threshold B1 and is less than or equal to the secondary early warning threshold B2, in this case, the detector A raising an alarm controls the solenoid valve a of the battery pack in which the detector A is located to be normally open, and solenoid valves a of the remaining battery packs are closed, the gaseous fire extinguishing agent bottle X is opened to start to spray the gaseous fire extinguishing agent to the battery pack with thermal runaway; when the detection value of the combination detector B is greater than or equal to the secondary early warning threshold B2, the combination detector B controls the solenoid valve b of the battery cluster in which the battery pack with thermal runaway is located to be opened, and the gaseous fire extinguishing agent starts to be sprayed in the battery cluster; when a detection value of the combination detector C is greater than or equal to the primary early warning threshold C1 and is less than or equal to the secondary early warning threshold C2, a gaseous fire extinguishing agent bottle Y is opened, and a gaseous fire extinguishing agent starts to be sprayed in a space of the battery compartment; and when the detection value of the combination detector C is greater than or equal to the secondary early warning threshold C2, the solenoid valve s is opened, and external firewater starts to be sprayed in the battery compartment.

Further, detection elements included in the combination detector A in step 2) are VOCs, smoke, CO, temperature, 02, and pressure; and when any one of detection values of four detection elements of CO, VOCs, smoke, and temperature in the combination detector A reaches the primary early warning threshold A1 and the detection values of the four detection elements of CO, VOCs, smoke, and temperature are all less than the secondary early warning threshold A2, it is determined that a current early warning level of the detector A is the primary early warning.

Further, when the four detection elements of CO, VOCs, smoke, and temperature in the combination detector A all reach the secondary early warning threshold A2, it is determined that the current early warning level of the combination detector A is the secondary early warning.

Further, detection elements included in the combination detector B in step 2) are flame, H2, smoke, and temperature; and when any one of three detection elements of H2, smoke, and temperature in the combination detector B reaches the primary early warning threshold B1 and is less than the secondary early warning threshold B2 and at the same time a flame sensor value remains unchanged, it is determined that a current early warning level of the detector B is the primary early warning.

Further, when the three detection elements of H2, smoke, and temperature in the combination detector B all reach the secondary early warning threshold B2 and the flame sensor value reaches the secondary early warning threshold B2, it is determined that the current early warning level of the combination detector B is the secondary early warning.

Further, when detection values of detection elements of smoke and flame in the combination detector C in step 2) all reach the primary early warning threshold C1, it is determined that a current early warning level of the combination detector C is the primary early warning.

Further, when the detection values of the detection elements of smoke and flame in the combination detector C all reach the secondary early warning threshold C2, it is determined that the current early warning level of the combination detector C is the secondary early warning.

Further, a detection element in the detector D is VOCs.

A prevention and control system of nitrogen protection and multi-region level-by-level detection for an energy storage power station is provided. The energy storage power station includes a device compartment and a battery compartment. A plurality of battery clusters are disposed in the battery compartment. A plurality of battery packs are disposed in each battery cluster. The system includes a central controller, an inert gas bottle group, a gaseous fire extinguishing agent bottle X, a gas pipe M, a solenoid valve N, a solenoid valve d, a detector D, a combination detector C, a combination detector B, a combination detector A, a solenoid valve a, a solenoid valve b, a gas pipe N, a gaseous fire extinguishing agent bottle Y, a solenoid valve s, a nozzle, and an external firewater port. The central controller, the solenoid valve d, the solenoid valve N, the gaseous fire extinguishing agent bottle X, the inert gas bottle group, and the detector D are disposed in the device compartment. One end of the gas pipe M extends into the device compartment to be respectively connected to the gaseous fire extinguishing agent bottle X and the inert gas bottle group, and the other end of the gas pipe M respectively extends into a single battery cluster and a single battery pack in the battery compartment. The solenoid valve N is disposed at an outlet end of the inert gas bottle group. The solenoid valve d is disposed at a gas spraying end in the device compartment. The solenoid valve b is disposed on the gas pipe M in communication with the single battery cluster. The solenoid valve a is disposed on the gas pipe M in communication with the single battery pack. The combination detector A is disposed in the single battery pack. The combination detector B is disposed in the single battery cluster. A plurality of combination detectors C are disposed at a top of the battery compartment. The detector D is disposed at a top of the device compartment. One end of the gas pipe N extends into the battery compartment to be connected to a plurality of nozzles, and the other end of the gas pipe N extends out of the battery compartment to be respectively connected to the gaseous fire extinguishing agent bottle Y and the external firewater port. The solenoid valve s is disposed at a water outlet end of the external firewater port. The solenoid valve N, the solenoid valve d, the detector D, the combination detector C, the combination detector B, the combination detector A, the solenoid valve a, the solenoid valve b, and the solenoid valve s are respectively electrically connected to the central controller.

Compared with the prior art, the beneficial effects of the present invention are as follows: specifically, an active defense system of nitrogen protection and a passive fire extinguishing mode of fire control detection are adopted for battery packs. For a battery cluster, a battery compartment, and a device compartment, characteristic gases of different types are mainly detected by using combination detectors, and it is accordingly determined whether thermal runaway occurs. A gaseous fire extinguishing agent and external firewater are mainly used in passive fire control, to comprehensively inhibit thermal runaway in an energy storage power station or even extinguish fire. Eventually, a safe operation system of an energy storage power station is constructed by combining an active protection and passive defense and by using a multi-region, multi-gas comprehensive detection and sensing and multi-fire extinguishing medium method. Different regional fire extinguishing and different fire extinguishing measures are adopted for different early warning levels. A plurality of detection elements are adopted to perform comprehensive determination for each early warning level, thereby avoiding unnecessary losses caused by false and missing alarms.

The present invention is described below in detail with reference to the accompanying drawings and specific implementations.

### Brief description of the drawings

FIG. 1 is a schematic flowchart of a prevention and control method of nitrogen protection and multi-region level-by-level detection for an energy storage power station; and
FIG. 2 is a schematic diagram of a structure of a prevention and control system of nitrogen protection and multi-region level-by-level detection for an energy storage power station.

Where: 1: energy storage container, 2: detector D, 3: combination detector C, 4: nozzle, 5: battery compartment, 6: gas pipe N, 7: combination detector B, 8: solenoid valve b, 9: solenoid valve a, 10: solenoid valve s, 11: external firewater port, 12: gaseous fire extinguishing agent bottle Y, 13: check valve, 14: combination detector A, 15: battery pack, 16: battery cluster, 17: central controller, 18: nitrogen bottle group, 19: gaseous fire extinguishing agent bottle X, 20: solenoid valve N, 21: device compartment, 22: gas pipe M, and 23: solenoid valve d.

### Detailed description of the invention

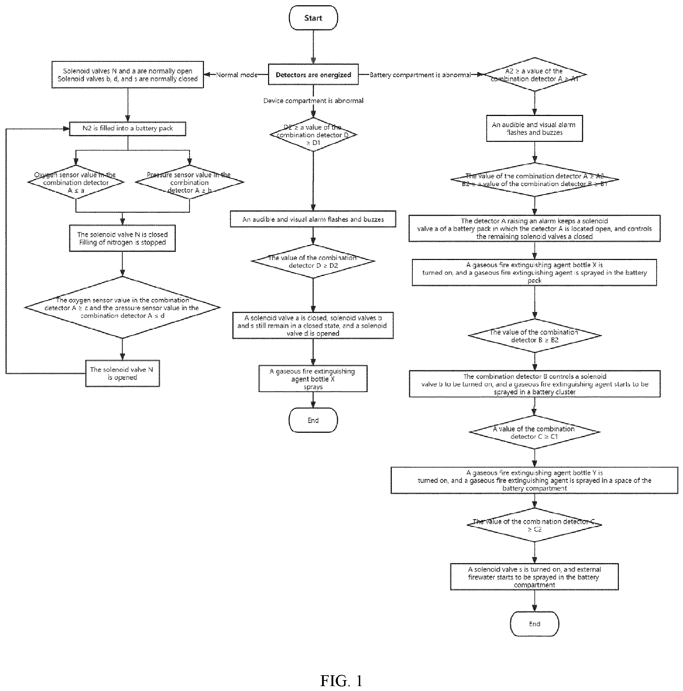

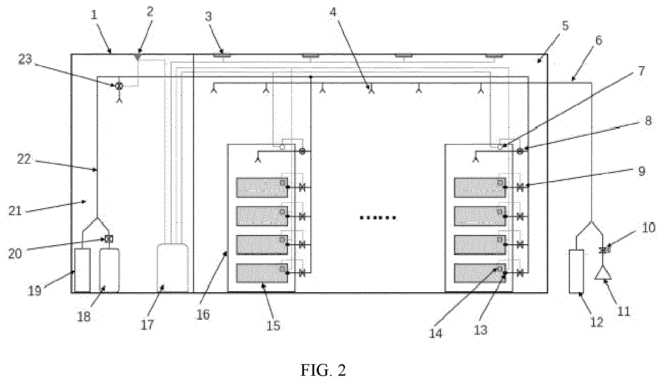

As shown in FIG. 1 and FIG. 2, a prevention and control method of nitrogen protection and multi-region level-by-level detection for an energy storage power station. The prevention and control method of nitrogen protection and multi-region level-by-level detection for an energy storage power station includes two modes: a normal operating mode and an abnormal mode, where:
1) in the normal operating mode, a solenoid valve a 9 and a solenoid valve N 20 are normally open, a solenoid valve b 8, a solenoid valve s 10, and a solenoid valve d 23 are normally closed, nitrogen starts to be filled into a battery pack 15, and when an oxygen sensor value in a detector A in the battery pack 15 is less than or equal to a or a pressure sensor value in the detector is greater than or equal to b, in this case, the solenoid valve N 20 is closed, filling of nitrogen into the battery pack 15 is stopped; and when the oxygen sensor value in the detector A in the battery pack 15 is greater than or equal to c and the pressure sensor value is less than or equal to d, the solenoid valve N 20 is opened, and N2 starts to be filled into the battery pack 15; and
2) the abnormal mode includes that a device compartment 21 is abnormal and that a battery compartment 5 is abnormal;

when the device compartment 21 is abnormal, a primary early warning threshold D1 and a secondary early warning threshold D2 of a detector D 2 are set, and when a detection value of the detector D 2 is greater than the primary early warning threshold D1 and is less than the secondary early warning threshold D2, it is determined that the detector D 2 reaches primary early warning, and an audible and visual alarm flashes and buzzes; and when the detection value of the detector D 2 is greater than the secondary early warning threshold D2, it is determined that the detector D 2 reaches secondary early warning, in this case, the detector D 2 controls the solenoid valve d 23 to be opened, the solenoid valve a 9 is closed, the solenoid valve b 8 and the solenoid valve s 10 still remain in a closed state, a gaseous fire extinguishing agent bottle X 19 is opened, and a gaseous fire extinguishing agent starts to sprayed into the device compartment 21; and
when the battery compartment 5 is abnormal, a primary early warning threshold A1 and a secondary early warning threshold A2 of a combination detector A 14, a primary early warning threshold B1 and a secondary early warning threshold B2 of a combination detector B 7, a primary early warning threshold C1 and a secondary early warning threshold C2 of a combination detector C 3 are set, when a detection value of a combination detector A 14 in a battery pack 15 is greater than or equal to a primary early warning threshold A1 but is less than or equal to a secondary early warning threshold A2, in this case, a central controller 17 controls the audible and visual alarm to flash and buzz; when the detection value of the combination detector A 14 in the battery pack 15 is greater than or equal to the secondary early warning threshold A2 and a detection value of a detector B in a battery cluster 16 is greater than or equal to a primary early warning threshold B1 and is less than or equal to a secondary early warning threshold B2, in this case, the detector A raising an alarm controls the solenoid valve a 9 of the battery pack 15 in which the detector A is located to be normally open, and solenoid valves a 9 of the remaining battery packs 15 are closed, the gaseous fire extinguishing agent bottle X 19 is opened to start to spray the gaseous fire extinguishing agent to the battery pack 15 with thermal runaway; when the detection value of the combination detector B 7 is greater than or equal to the secondary early warning threshold B2, the combination detector B 7 controls the solenoid valve b 8 of the battery cluster 16 in which the battery pack 15 with thermal runaway is located to be opened, and the gaseous fire extinguishing agent starts to be sprayed in the battery cluster 16; when a detection value of the combination detector C 3 is greater than or equal to a primary early warning threshold C1 and is less than or equal to a secondary early warning threshold C2, a gaseous fire extinguishing agent bottle Y 12 is opened, and a gaseous fire extinguishing agent starts to be sprayed in a space of the battery compartment 5; and when the detection value of the combination detector C 3 is greater than or equal to the secondary early warning threshold C2, the solenoid valve s 10 is opened, and external firewater starts to be sprayed in the battery compartment 5.

"Five-level protection" for an energy storage power station:
(1) Multiple regions are the battery pack 15, the battery cluster 16, the battery compartment 5, and the device compartment 21. The specific smallest fire extinguishing unit is a single battery pack 15, so that fire extinguishing can be performed on a single battery pack 15 in a targeted manner. A corresponding fire extinguishing measure is implemented according to an early warning level of a single battery pack 15 without affecting other battery packs 15, and a single battery pack 15 is kept from excessive fire extinguishing, thereby minimizing unnecessary losses.
(2) Active protection: An inert gas such as N2 is filled respectively into the device compartment 21, the battery cluster 16, and the battery pack 15 to reduce oxygen concentration and implement isolation from oxygen. In the normal operating mode, defensive protection is implemented for the device compartment 21, the battery cluster 16, and the battery pack 15. A general N2 filling mode in the battery compartment 5 is not adopted in this application, but instead is filled into the battery cluster 16 and the battery pack 15 in a targeted manner, thereby reducing the usage of N2 and implementing more effective protection of N2.
(3) Detection: A detection technology using combination detectors and a plurality of detection elements is adopted. The plurality of detection elements are combined for determination, thereby avoiding missing and false alarms. Compared with using other single sensors, combination detectors have more comprehensive functions, occupy a smaller area in an energy storage power station, are more readily controllable, and have simpler connections. For example, VOCs, smoke, CO, and temperature in the combination detector A 14 may provide comprehensive reliable data for recognizing an early warning level, and O2 and pressure may provide reference data of a filling amount and filling start and stop for filling of N2 in the normal operating mode.
(4) Inhibition is implemented by using the gaseous fire extinguishing agent and external firewater. The external firewater in this application is used as the final measure of fire extinguishing to resolve the drawback of high electrical conductivity of a water-based fire extinguishing agent in the prior art, to allow a water-based fire extinguishing agent to truly serve as a temperature reduction measure in an energy storage power station. The application of a water-based fire extinguishing agent in an energy storage power station in the prior art in fact still has some operational difficulties. For a water-based fire extinguishing agent, only one water port is usually reserved in fire extinguishing for an actual energy storage power station. In practice, an operator needs to discover a fire and connect external firewater, which has a serious lag in time. Therefore, in combination with the disadvantage in the prior art, the inventor of this application comprehensively considers the drawback that a minor fire may collapse an entire energy storage power station due to the nature of the high electrical conductivity of a water-based fire extinguishing agent and the problem that a lag in time in an operation of externally connecting firewater may lead to a failure to implement temperature reduction in time, and improves an early warning level of using a water-based fire extinguishing agent.
(5) Level-by-level early warning protection: According to characteristics of the multiple regions and in combination with protection requirements of an energy storage power station, to reduce unnecessary collateral fire extinguishing losses, corresponding fire extinguishing measures are adopted according to different levels and regions.

Detection elements included in the combination detector A 14 in step 2) are VOCs, smoke, CO, temperature, O2, and pressure. When any one of detection values of four detection elements of CO, VOCs, smoke, and temperature in the combination detector A 14 reaches the primary early warning threshold A1 and the detection values of the four detection elements of CO, VOCs, smoke, and temperature are all less than the secondary early warning threshold A2, it is determined that a current early warning level of the detector A is the primary early warning.

When the four detection elements of CO, VOCs, smoke, and temperature in the combination detector A 14 all reach the secondary early warning threshold A2, it is determined that the current early warning level of the combination detector A 14 is the secondary early warning.

Detection elements included in the combination detector B 7 in step 2) are flame, H2, smoke, and temperature. When any one of three detection elements of H2, smoke, and temperature in the combination detector B 7 reaches the primary early warning threshold B 1 and is less than the secondary early warning threshold B2 and at the same time a flame sensor value remains unchanged, it is determined that a current early warning level of the detector B is the primary early warning.

When the three detection elements of H2, smoke, and temperature in the combination detector B 7 all reach the secondary early warning threshold B2 and the flame sensor value reaches the secondary early warning threshold B2, it is determined that the current early warning level of the combination detector B 7 is the secondary early warning.

When detection values of detection elements of smoke and flame in the combination detector C 3 in step 2) all reach the primary early warning threshold C1, it is determined that a current early warning level of the combination detector C 3 is the primary early warning.

When the detection values of the detection elements of smoke and flame in the combination detector C 3 all reach the secondary early warning threshold C2, it is determined that the current early warning level of the combination detector C 3 is the secondary early warning.

A detection element in the detector D 2 is VOCs. The primary early warning threshold A1, the secondary early warning threshold A2, the primary early warning threshold B 1, the secondary early warning threshold B2, the primary early warning threshold C1, and the secondary early warning threshold C2 in this application are not specific values, but instead are corresponding values that are set according to detection elements that are respectively covered by the detector D 2, the combination detector C 3, the combination detector B 7, and the combination detector A 14. For example, in the combination detector A 14, the detection elements include VOCs, smoke, CO, temperature, O2, and pressure. In this case, the primary early warning threshold A1 should correspond to a value A13 of VOCs, a value A11 of CO, a value A14 of smoke, and a value A15 of temperature. According to existing thermal runaway standards in this technical field, a primary early warning threshold A13 of VOCs, a primary early warning threshold A11 of CO, a primary early warning threshold A14 of smoke, and a primary early warning threshold A15 of temperature are respectively set. Similarly, the secondary early warning threshold A2 should correspond to a secondary early warning threshold A23 of VOCs, a secondary early warning threshold A21 of CO, a secondary early warning threshold A24 of smoke, and a secondary early warning threshold A25 of temperature. When the detection value of VOCs reaches the primary early warning threshold A13, or the detection value of CO reaches the primary early warning threshold A11, or the detection value of smoke reaches the primary early warning threshold A14, or the detection value of temperature reaches the primary early warning threshold A15, and the detection value of VOCs is less than the secondary early warning threshold A23, the detection value of CO is less than the secondary early warning threshold A21, the detection value of smoke is less than the secondary early warning threshold A24, and the detection value of temperature is less than the secondary early warning threshold A25, it is determined that the current early warning level of the detector A is primary early warning. The primary early warning threshold B 1 of the combination detector B 7 should correspond to a primary early warning threshold B12 of H2, a primary early warning threshold B 14 of smoke, a primary early warning threshold B 15 of temperature, and a primary early warning threshold B 16 of flame. The secondary early warning threshold B2 should correspond to a secondary early warning threshold B22 of H2, a secondary early warning threshold B24 of smoke, a secondary early warning threshold B25 of temperature, and a secondary early warning threshold B26 of flame. The primary early warning threshold C1 of the combination detector C 3 should correspond to a primary early warning threshold C 14 of smoke and a primary early warning threshold C16 of flame. The secondary early warning threshold C2 should correspond to a secondary early warning threshold C24 of smoke and the secondary early warning threshold C26 of flame. The primary early warning threshold D1 of the detector D 2 corresponds to a primary early warning threshold D13 of VOCs, and the secondary early warning threshold D2 corresponds to a secondary early warning threshold D23 of VOCs. The early warning thresholds at different levels in the combination detector B 7, the combination detector C 3, and the detector D 2 are established according to the prior art in the industry, and a specific determination method is similar to that of the foregoing combination detector A 14.

### Primary early warning threshold

| Alarm Level | Detector type | Sensor type/threshold | | | | | | | |
|---|---|---|---|---|---|---|---|---|---|
| | | CO | H2 | VOC | Smoke | Temperature | Flame | O2 | Pressure |
| Primary | Combination detector A | A11 | \ | A13 | A14 | A15 | \ | \ | \ |
| | Combination detector B | \ | B12 | \ | B14 | B15 | B16 | \ | \ |
| | Combination detector C | \ | \ | \ | C14 | \ | C16 | \ | \ |
| | Detector D | \ | \ | D13 | \ | \ | \ | \ | \ |

### Secondary early warning threshold

| Alarm Level | Detector type | Sensor type/threshold | | | | | | | |
|---|---|---|---|---|---|---|---|---|---|
| | | CO | H2 | VOC | Smoke | Temperature | Flame | O2 | Pressure |
| Secondary | Combination detector A | A21 | \ | A23 | A24 | A25 | \ | \ | \ |
| | Combination detector B | \ | B22 | \ | B24 | B25 | B26 | \ | \ |
| | Combination detector C | \ | \ | \ | C24 | \ | C26 | \ | \ |
| | Detector D | \ | \ | D23 | \ | \ | \ | \ | \ |

When the four detection elements of CO, VOCs, smoke, and temperature in the combination detector A 14 all reach the secondary early warning threshold A2, it is determined that the current early warning level of the combination detector A 14 is the secondary early warning.

A prevention and control system of nitrogen protection and multi-region level-by-level detection for an energy storage power station is provided. The energy storage power station uses a form of energy storage container 1 and includes a device compartment 21 and a battery compartment 5. A plurality of battery clusters 16 are disposed in the battery compartment 5. A plurality of battery packs 15 are disposed in each battery cluster 16. The system includes a central controller 17, an inert gas bottle group, a gaseous fire extinguishing agent bottle X 19, a gas pipe M 22, a solenoid valve N 20, a solenoid valve d 23, a detector D 2, a combination detector C 3, a combination detector B 7, a combination detector A 14, a solenoid valve a 9, a solenoid valve b 8, a gas pipe N 6, a gaseous fire extinguishing agent bottle Y 12, a solenoid valve s 10, a nozzle 2, and an external firewater port 11. The central controller 17, the solenoid valve d 23, the solenoid valve N 20, the gaseous fire extinguishing agent bottle X 19, the inert gas bottle group, and the detector D 2 are disposed in the device compartment 21. One end of the gas pipe M 22 extends into the device compartment 21 to be respectively connected to the gaseous fire extinguishing agent bottle X 19 and the inert gas bottle group, and the other end of the gas pipe M 22 respectively extends into a single battery cluster 16 and a single battery pack 15 in the battery compartment 5. The solenoid valve N 20 is disposed at an outlet end of the inert gas bottle group. The solenoid valve d 23 is disposed at a gas spraying end in the device compartment 21. The solenoid valve b 8 is disposed on the gas pipe M 22 in communication with the single battery cluster 16. The solenoid valve a 9 is disposed on the gas pipe M 22 in communication with the single battery pack 15. The combination detector A 14 is disposed in the single battery pack 15. The combination detector B 7 is disposed in the single battery cluster 16. A plurality of combination detectors C 3 are disposed at a top of the battery compartment 5. The detector D 2 is disposed at a top of the device compartment 21. One end of the gas pipe N 6 extends into the battery compartment 5 to be connected to a plurality of nozzles 4, and the other end of the gas pipe N 6 extends out of the battery compartment 5 to be respectively connected to the gaseous fire extinguishing agent bottle Y 12 and the external firewater port 11. The solenoid valve s 10 is disposed at a water outlet end of the external firewater port 11. The solenoid valve N 20, the solenoid valve d 23, the detector D 2, the combination detector C 3, the combination detector B 7, the combination detector A 14, the solenoid valve a 9, the solenoid valve b 8, and the solenoid valve s 10 are respectively electrically connected to the central controller 17.

In the description of the present invention, it needs to be understood that orientation or location relationships indicated by terms "up", "middle", "outside", and "inside" are only used to facilitate description of the present invention and simplify description, but are not used to indicate or imply that the components or elements must have specific orientations or are constructed and operated by using specific orientations, and therefore, cannot be understood as a limit to the present invention.

For a person skilled in the art, apparently, the present invention is not limited to the details in the foregoing exemplary embodiments, and the present invention can be implemented in other specific forms without departing from the spirit or basic features of the present invention. Therefore, from all perspectives, the embodiments should be considered to be exemplary and non-limitative. The scope of the present invention is defined by the appended claims instead of the foregoing description. Therefore, all changes that fall within the meanings and scope of equivalent elements of the claims are intended to be covered by the present invention. Any reference numeral in the claims should not be construed as limiting the related claims.

In addition, it should be understood that although the specification is described according to the implementations, each implementation does not necessarily include only one independent technical solution. The description manner of the specification is only used for clarity, and a person skilled in the art should consider the specification as a whole. The technical solutions in the embodiments may be appropriately combined to form other implementations comprehensible to a person skilled in the art.

## Claims

1. A prevention and control method of nitrogen protection and multi-region level-by-level detection for an energy storage power station, the prevention and control method of nitrogen protection and multi-region level-by-level detection for an energy storage power station comprising two modes: a normal operating mode and an abnormal mode, **characterized in that:**
1) in the normal operating mode, a solenoid valve a and a solenoid valve N are normally open, a solenoid valve b, a solenoid valve s, and a solenoid valve d are normally closed, nitrogen starts to be filled into a battery pack, and when an oxygen sensor value in a detector A in the battery pack is less than or equal to a or a pressure sensor value in the detector is greater than or equal to b, in this case, the solenoid valve N is closed, filling of nitrogen into the battery pack is stopped; and when the oxygen sensor value in the detector A in the battery pack is greater than or equal to c and the pressure sensor value is less than or equal to d, the solenoid valve N is opened, and N2 starts to be filled into the battery pack; and
2) the abnormal mode comprises that a device compartment is abnormal and that a battery compartment is abnormal;
when the device compartment is abnormal, a primary early warning threshold D1 and a secondary early warning threshold D2 of a detector D are set, and when a detection value of the detector D is greater than the primary early warning threshold D1 and is less than the secondary early warning threshold D2, it is determined that the detector D reaches primary early warning, and an audible and visual alarm flashes and buzzes; and when the detection value of the detector D is greater than the secondary early warning threshold D2, it is determined that the detector D reaches secondary early warning, in this case, the detector D controls the solenoid valve d to be opened, the solenoid valve a is closed, the solenoid valve b and the solenoid valve s still remain in a closed state, a gaseous fire extinguishing agent bottle X is opened, and a gaseous fire extinguishing agent starts to sprayed into the device compartment; and
when the battery compartment is abnormal, a primary early warning threshold A1 and a secondary early warning threshold A2 of a combination detector A, a primary early warning threshold B 1 and a secondary early warning threshold B2 of a combination detector B, a primary early warning threshold C1 and a secondary early warning threshold C2 of a combination detector C are set, when a detection value of a combination detector A in a battery pack is greater than or equal to the primary early warning threshold A1 but is less than or equal to the secondary early warning threshold A2, in this case, a central controller controls the audible and visual alarm to flash and buzz; when the detection value of the combination detector A in the battery pack is greater than or equal to the secondary early warning threshold A2 and a detection value of a detector B in a battery cluster is greater than or equal to the primary early warning threshold B 1 and is less than or equal to the secondary early warning threshold B2, in this case, the detector A raising an alarm controls the solenoid valve a of the battery pack in which the detector A is located to be normally open, and solenoid valves a of the remaining battery packs are closed, the gaseous fire extinguishing agent bottle X is opened to start to spray the gaseous fire extinguishing agent to the battery pack with thermal runaway; when the detection value of the combination detector B is greater than or equal to the secondary early warning threshold B2, the combination detector B controls the solenoid valve b of the battery cluster in which the battery pack with thermal runaway is located to be opened, and the gaseous fire extinguishing agent starts to be sprayed in the battery cluster; when a detection value of the combination detector C is greater than or equal to the primary early warning threshold C1 and is less than or equal to the secondary early warning threshold C2, a gaseous fire extinguishing agent bottle Y is opened, and a gaseous fire extinguishing agent starts to be sprayed in a space of the battery compartment; and when the detection value of the combination detector C is greater than or equal to the secondary early warning threshold C2, the solenoid valve s is opened, and external firewater starts to be sprayed in the battery compartment.

2. The prevention and control method of nitrogen protection and multi-region level-by-level detection for an energy storage power station of claim 1, **characterized in that** detection elements comprised in the combination detector A in step 2) are VOCs, smoke, CO, temperature, O2, and pressure; and when any one of detection values of four detection elements of CO, VOCs, smoke, and temperature in the combination detector A reaches the primary early warning threshold A1 and the detection values of the four detection elements of CO, VOCs, smoke, and temperature are all less than the secondary early warning threshold A2, it is determined that a current early warning level of the detector A is the primary early warning.

3. The prevention and control method of nitrogen protection and multi-region level-by-level detection for an energy storage power station of claim 2, **characterized in that** when the four detection elements of CO, VOCs, smoke, and temperature in the combination detector A all reach the secondary early warning threshold A2, it is determined that the current early warning level of the combination detector A is the secondary early warning.

4. The prevention and control method of nitrogen protection and multi-region level-by-level detection for an energy storage power station of claim 1, **characterized in that** detection elements comprised in the combination detector B in step 2) are flame, H2, smoke, and temperature; and when any one of three detection elements of H2, smoke, and temperature in the combination detector B reaches the primary early warning threshold B1 and is less than the secondary early warning threshold B2 and at the same time a flame sensor value remains unchanged, it is determined that a current early warning level of the detector B is the primary early warning.

5. The prevention and control method of nitrogen protection and multi-region level-by-level detection for an energy storage power station of claim 4, **characterized in that** when the three detection elements of H2, smoke, and temperature in the combination detector B all reach the secondary early warning threshold B2 and the flame sensor value reaches the secondary early warning threshold B2, it is determined that the current early warning level of the combination detector B is the secondary early warning.

6. The prevention and control method of nitrogen protection and multi-region level-by-level detection for an energy storage power station of claim 1, **characterized in that** when detection values of detection elements of smoke and flame in the combination detector C in step 2) all reach the primary early warning threshold C1, it is determined that a current early warning level of the combination detector C is the primary early warning.

7. The prevention and control method of nitrogen protection and multi-region level-by-level detection for an energy storage power station of claim 6, **characterized in that** when the detection values of the detection elements of smoke and flame in the combination detector C all reach the secondary early warning threshold C2, it is determined that the current early warning level of the combination detector C is the secondary early warning.

8. The prevention and control method of nitrogen protection and multi-region level-by-level detection for an energy storage power station of claim 1, **characterized in that** a detection element in the detector D is VOCs.

9. A prevention and control system of nitrogen protection and multi-region level-by-level detection for an energy storage power station, the energy storage power station comprising a device compartment and a battery compartment, a plurality of battery clusters being disposed in the battery compartment, a plurality of battery packs being disposed in each battery cluster, **characterized in that** the system comprises a central controller, an inert gas bottle group, a gaseous fire extinguishing agent bottle X, a gas pipe M, a solenoid valve N, a solenoid valve d, a detector D, a combination detector C, a combination detector B, a combination detector A, a solenoid valve a, a solenoid valve b, a gas pipe N, a gaseous fire extinguishing agent bottle Y, a solenoid valve s, a nozzle, and an external firewater port, the central controller, the solenoid valve d, the solenoid valve N, the gaseous fire extinguishing agent bottle X, the inert gas bottle group, and the detector D are disposed in the device compartment, one end of the gas pipe M extends into the device compartment to be respectively connected to the gaseous fire extinguishing agent bottle X and the inert gas bottle group, the other end of the gas pipe M respectively extends into a single battery cluster and a single battery pack in the battery compartment, the solenoid valve N is disposed at an outlet end of the inert gas bottle group, the solenoid valve d is disposed at a gas spraying end in the device compartment, the solenoid valve b is disposed on the gas pipe M in communication with the single battery cluster, the solenoid valve a is disposed on the gas pipe M in communication with the single battery pack, the combination detector A is disposed in the single battery pack, the combination detector B is disposed in the single battery cluster, a plurality of combination detectors C are disposed at a top of the battery compartment, the detector D is disposed at a top of the device compartment, one end of the gas pipe N extends into the battery compartment to be connected to a plurality of nozzles, the other end of the gas pipe N extends out of the battery compartment to be respectively connected to the gaseous fire extinguishing agent bottle Y and the external firewater port, the solenoid valve s is disposed at a water outlet end of the external firewater port, and the solenoid valve N, the solenoid valve d, the detector D, the combination detector C, the combination detector B, the combination detector A, the solenoid valve a, the solenoid valve b, and the solenoid valve s are respectively electrically connected to the central controller.
